# EUROPEAN PATENT APPLICATION

(11) **EP 3 734 800 A1**
(43) Date of publication of application: **04.11.2020**
(21) Application number: 20172736.9
(22) Date of filing: 04.05.2020
(51) Int. Cl.: H02J 50/00

(54) **A POWER SELF HARVESTING CONTROL SYSTEM AND METHOD**

(30) Priority: 02.05.2019 US 201916402131
(71) Applicant: Waterbit, Inc., San Jose, CA 95138 (US)
(72) Inventor: WRIGHT, Andrew, Fremont, CA 94539 (US); CHASTAINE, Leif Alan, San Jose, CA 95123 (US); NEMECEK, Craig, Seattle, WA 98136 (US); KOUTNY, William Walter, Santa Clara, CA 95054 (US); TAYLOR, David Ray, San Jose, CA 95129 (US); GARCIA JIMENEZ, Luis Hector, Salinas, CA 93905 (US)
(74) Representative: Dilg, Haeusler, Schindelmann Patentanwaltsgesellschaft mbH

(57) **Abstract**

Systems and methods facilitate efficient and effective monitoring and control of various activities using a remote self-contained in-field installed device capable of self-harvesting power. A power self harvesting control device comprises: a power sub-system configured to self-harvest energy required of its internal components; a communication sub-system configured to communicate with other external devices; an exterior function interface sub-system configured to generate and receive input/output signals associated with the external component interactions; and a management sub-system configured to manage and coordinate activities of the power control sub-system, the communication sub-system, and external function control sub-system. The management sub-system directs management and coordination of the self-harvested energy supply and consumption. The power sub-subsystem includes a non-removable self contained energy storage component that stores self-harvested energy.

## Description

### FIELD OF THE INVENTION

. Embodiments of the present invention relate to the field of electronic device systems and methods that facilitate efficient and effective monitoring and control of various conditions and activities, such as, for instance, irrigation control and monitoring.

### BACKGROUND

. Various electronic technologies have the potential to offer numerous benefits (e.g., increased productivity, reduced costs, etc.) in the field of remote control and monitoring. However, diverse applications and activities can give rise to or involve constraints and difficulties, e.g., remote environmental conditions, that can make utilization of the electronic technologies impractical or impossible. There are often practical or implementation details and considerations associated with the nature, characteristics, and features of the applications and activities that limit or prohibit implementation and actual utilization of many traditional electronic technologies.

. The difficulties associated with actual implementation can be based on various factors (e.g., technological, logistical, economical, etc.). In a number of applications and activities, the external environment can make utilization of an electronic device difficult or impractical. For example, a number of environmental conditions and activities can impact utilization of an external power supply. In some instances the location of a device (e.g., remote, inaccessible, under water, on a mobile platform, etc.) limits the availability of external power sources. For example, if a location is very remote there may be no convenient connection to an external power supply (e.g., a utility source, etc.). Activities in an environment can also make external power supply impractical or impossible. Movement of other objects or entities (e.g., equipment, vehicles, animals, humans, etc.) in the environment can adversely impact external power supply delivery. The motion can interfere with or destroy external power supply infrastructure (e.g., wires, towers, poles, etc.). For example, in an agricultural application, workers and farm equipment (e.g., plowing machinery, harvesting equipment, etc.) can interfere with (e.g., break, pull up, cut, get entangled, etc.) external power supply equipment/infrastructure (e.g., wires, mounting supports, poles, etc.).

. To manage the difficulties in using external power supplies, many electronic devices employed in the field utilize replaceable internal batteries, e.g., electro-chemical replaceable batteries. The problem with using this type of power source is that although the power source is internal, the batteries unfortunately eventually need to be replaced which limits the useful life cycle of the electronic device while also creating a service requirement for the device which typically requires costly manual attention, e.g., trained technicians to replace the batteries at scheduled intervals. Even if the costs and servicing inconveniences are acceptable, the act of replacing internal batteries typically requires opening of the device and exposure of the internals of the device thereby potentially causing breaks in, or mishandling of, waterproof seals of the device and eventual internal damage thereto due to water infiltration.

. A lack of adequate power supply can greatly reduce the possibility of using remote based electronic devices for a number of applications and activities. There have been some conventional attempts at power self harvesting, but these typically have limited applications and are not readily adaptable to a number of situations/environments. Many applications and activities require relatively large amounts of power. However, the applications and activities also require relatively small size devices, which in turn typically limits the availability of opportunities for power self harvesting functionality. For example, a small device usually has a very limited area for solar power collection components, which in turn means very limited power self harvesting. Limitations of traditional power self harvesting approaches typically make many device participation activities impractical or impossible (e.g., communications, monitoring, control, etc.). A number of application activities and tasks have power requirements that limited traditional approaches are not able to meet.

. The external environment can also impact other aspects of a remote electronic device. In some applications the external environment can adversely impact the electronic technology/components included in a device designed to be used in the field. Environmental conditions can cause various types of device breakdown (e.g. enclosure damage, short circuits, etc.) and degraded performance results. Environmental elements (e.g., water, moisture, gas, fumes, fertilizer, chemical compounds, etc.) can have corrosive effects on the components of a device. Physical contact from things in the environment (e.g., equipment, vehicles, animals, humans etc.) can adversely impact and damage the device.

. Therefore, many remote electronic devices that are designed to be used in the field suffer from requiring too much manual servicing to replace batteries, are sized (too large) such that they interfere with machines that are expected to be used in the field, do not wear well over time considering likely environmental conditions of the field (either causing external or internal damage) in which they are used and can be impractical considering overall costs and complexity given their intended purposes.

### SUMMARY

. Presented systems and methods facilitate efficient and effective monitoring and control of various activities. In one embodiment, a power self harvesting control device comprises: a power sub-system configured to self-harvest energy while avoiding reliance on energy supplied from other devices; a communication sub-system configured to communicate with other devices; an exterior function interface sub-system configured to handle input/output signals associated with the exterior component interactions; and a management sub-system configured to manage and coordinate activities of the power control sub-system, the communication sub-system, and exterior function control sub-system. The management sub-system can direct management and coordination of the self-harvested energy supply and consumption. The power sub-subsystem can include a non-removable self contained energy storage component that stores self-harvested energy.

. In one embodiment, the power sub-system includes a self-harvesting energy component. The power sub-system can include a solar cell component and the solar cell component can include a protective cover component. In one exemplary implementation, the protective cover component includes gorilla glass. The non-removable self contained energy storage component can include a super capacitor. The non-removable self contained energy storage component is re-charged with energy from the self-harvesting energy component. The power sub-system can supply power to components of the power self harvesting device, including the communication sub-system, the exterior function interface sub-system, and management sub-system. In one embodiment, the power sub-system supplies power to the exterior components, wherein the exterior components are not directly included in the power self harvesting device. The power sub-subsystem can supply power at a first level to a portion of the interior components and supply power at a second level to another portion of the interior components and to exterior components. In one embodiment, the first level is as low as the operating voltage of a micro-controller. In one embodiment, the first level is as low as the operating voltage of a CMOS technology component. In one embodiment, the first level is in a range of 2.0 to 3.0 volts plus or minus 10 percent and the second level is a range of 5.0 to 7.0 volts plus or minus 10 percent. In one embodiment, the first level is utilized for internal power savings and the second level is used to supply power to external peripheral components. In one embodiment, the second level is compatible with transistor-transistor logic (TTL) voltage ranges and used to supply power to TTL components.

.In one embodiment, the power self harvesting control device comprises an enclosure structurally configured to secure the power sub-system, the exterior function interface sub-system, and the management sub-system. The components mounted inside the enclosure can be secured within the enclosure. For example, the enclosure can include potting material disposed to encapsulate components within the enclosure. In one embodiment, the energy harvesting sub-system is coupled to the enclosure with a pressure sensitive adhesive (PSA).

### BRIEF DESCRIPTION OF THE DRAWINGS

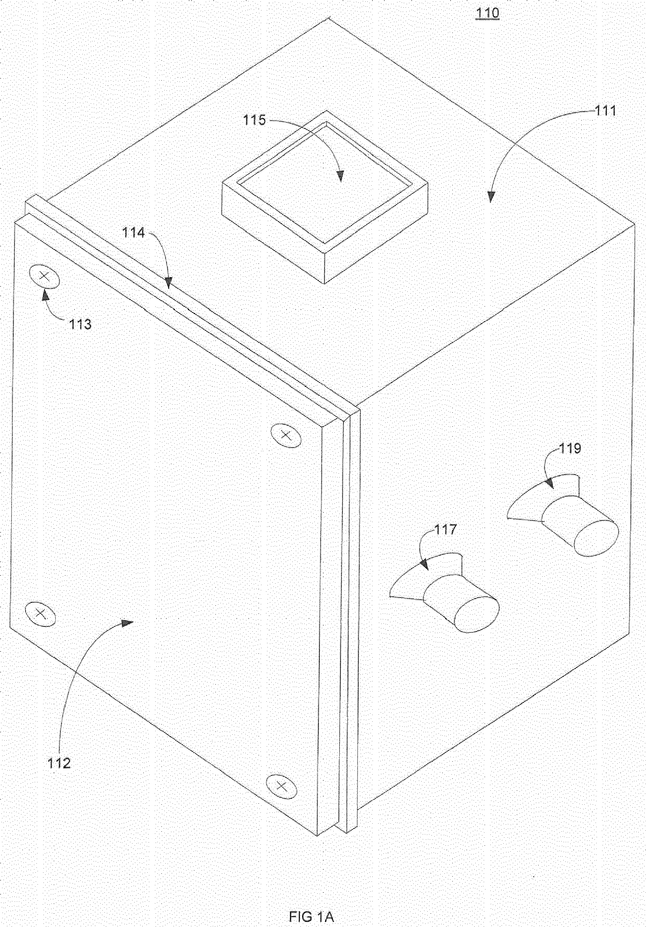

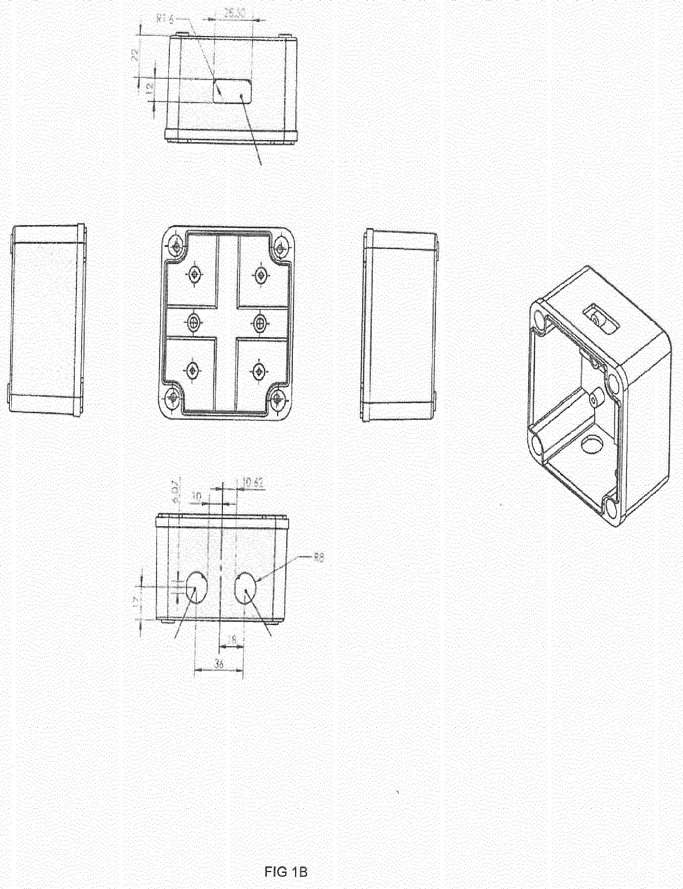

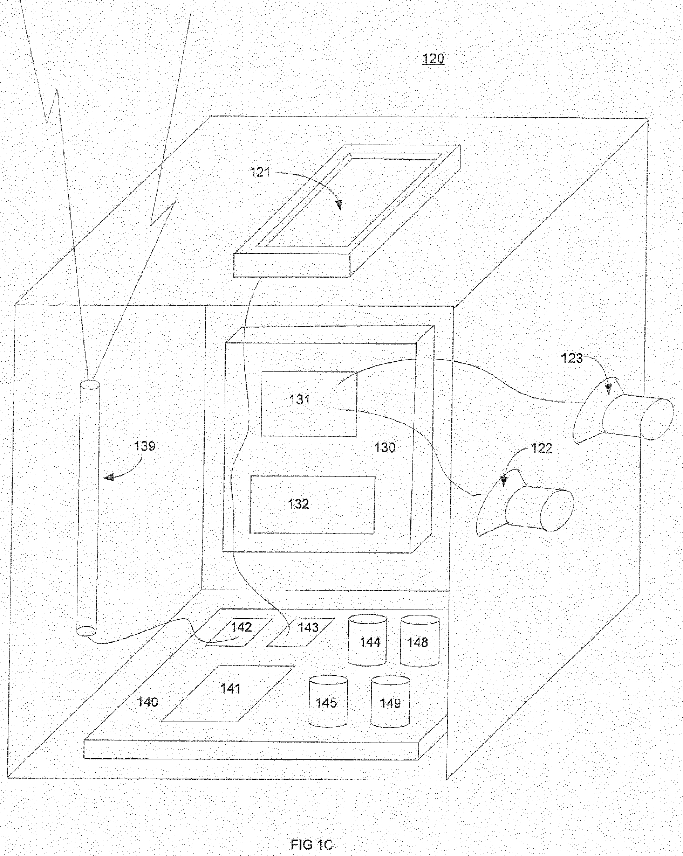

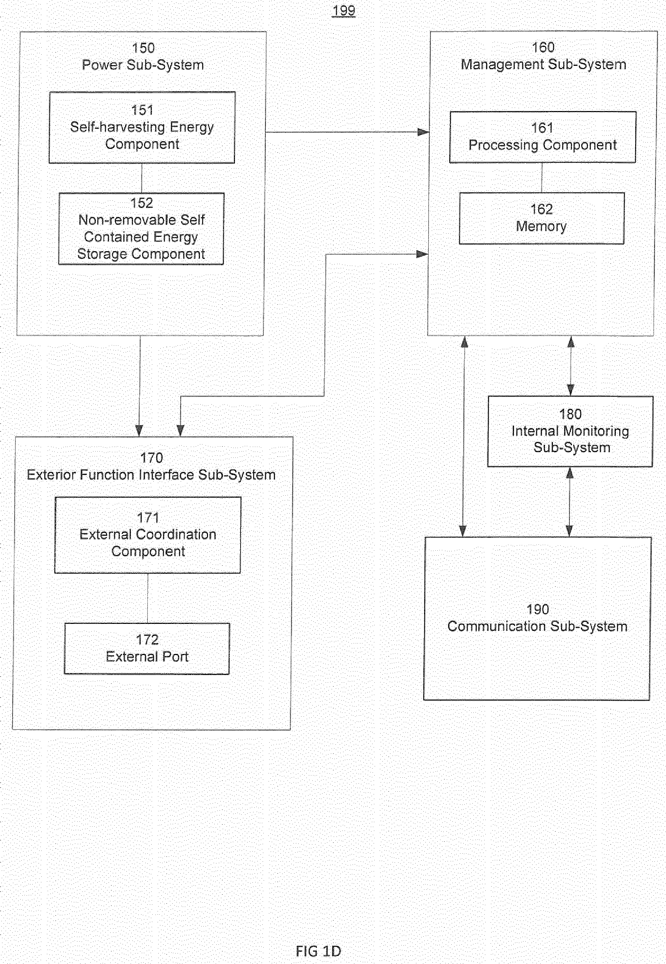

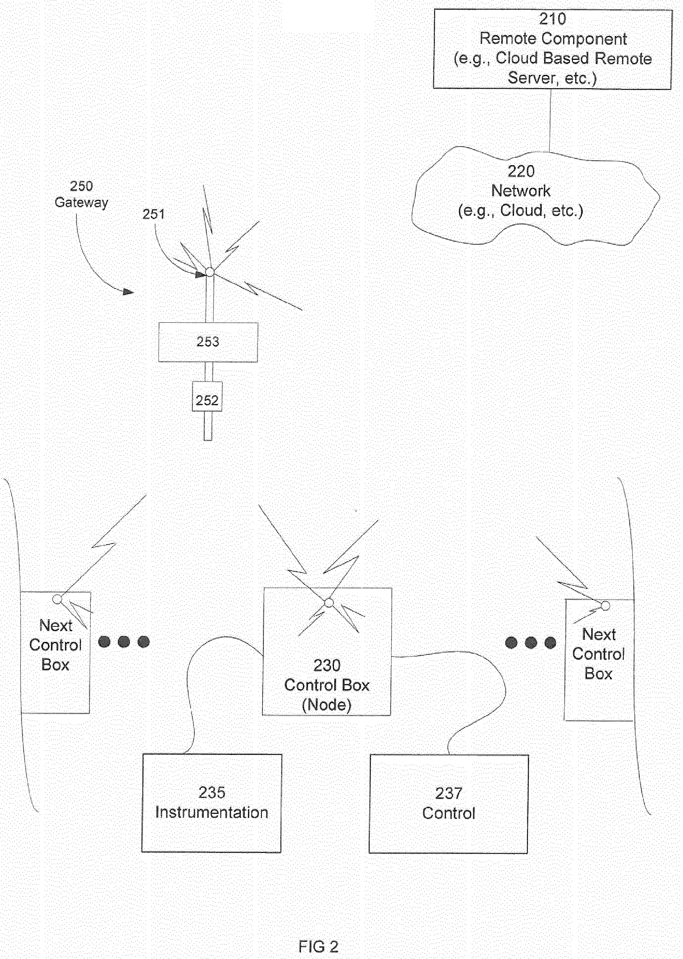

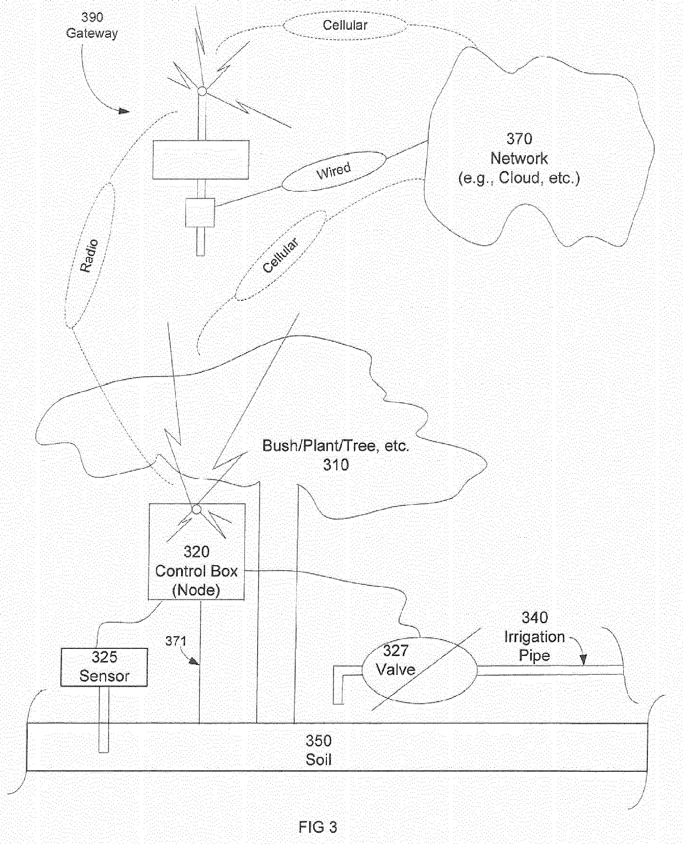

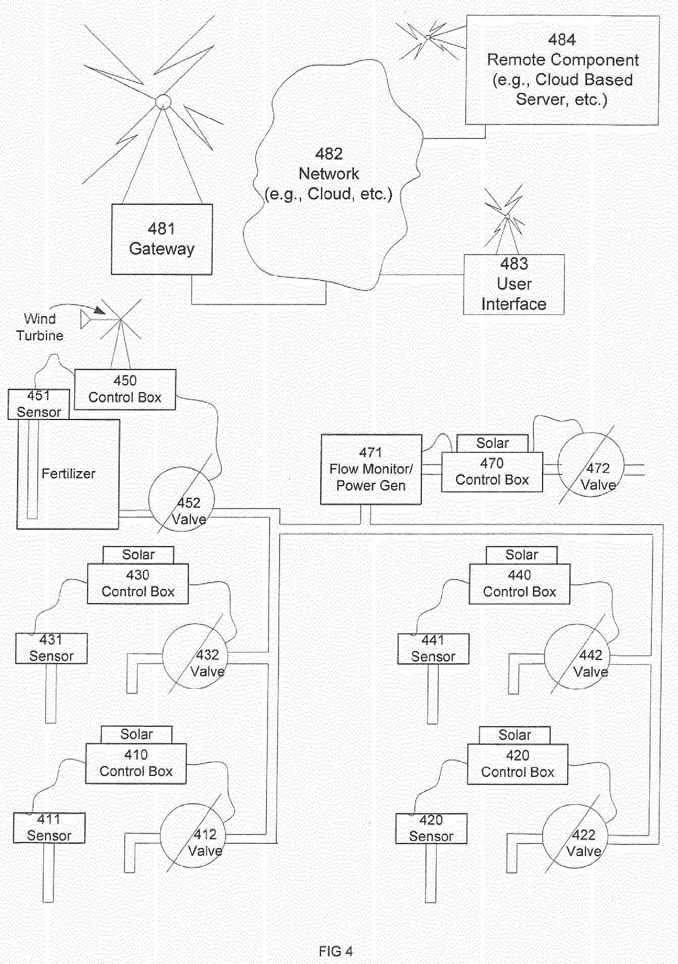

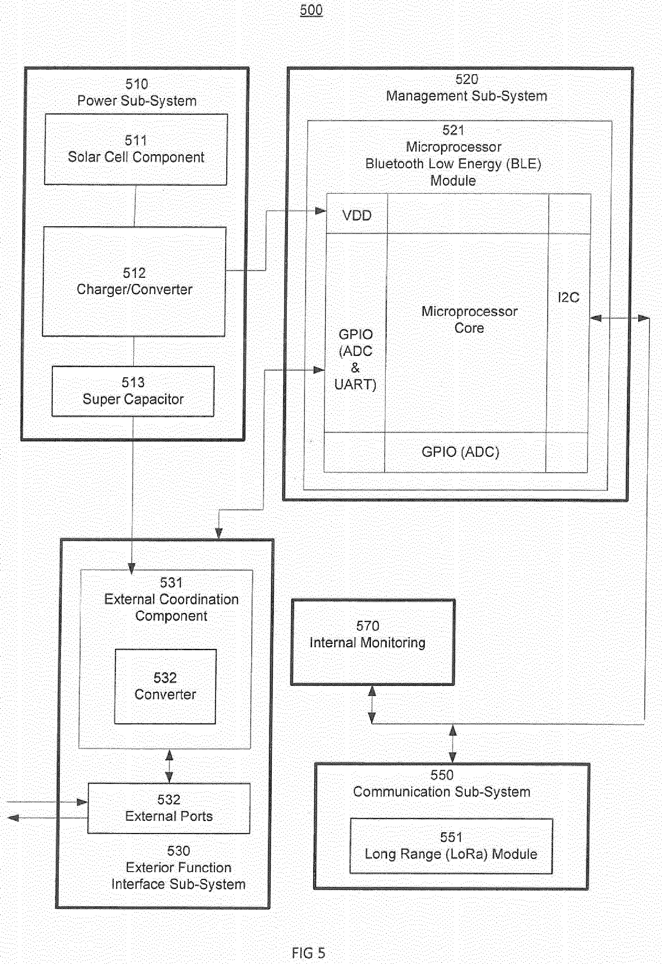

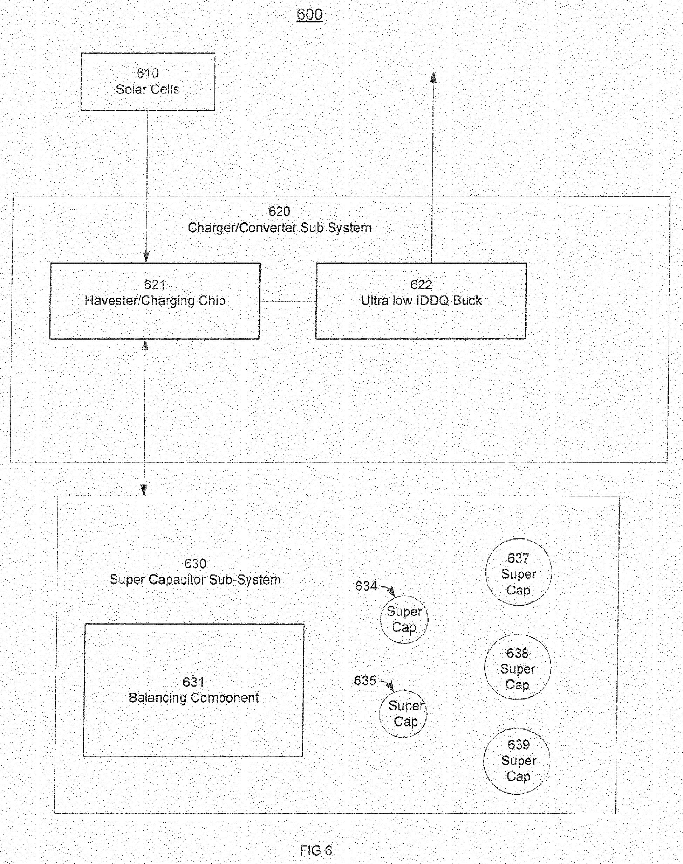

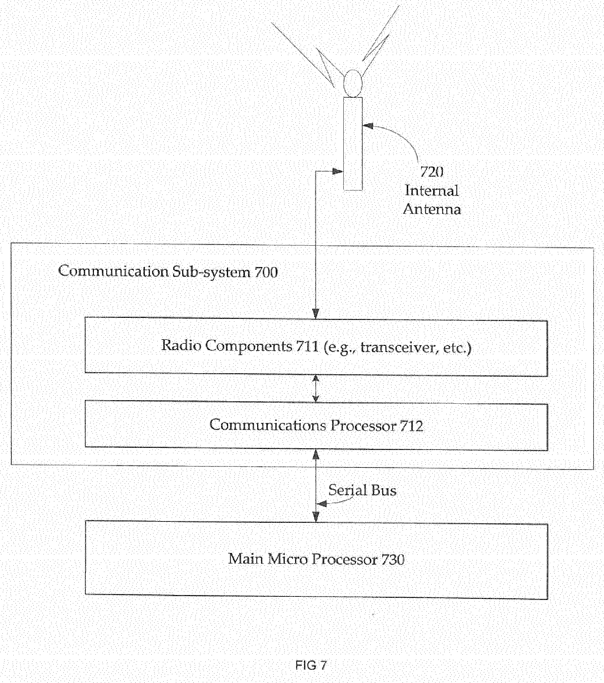

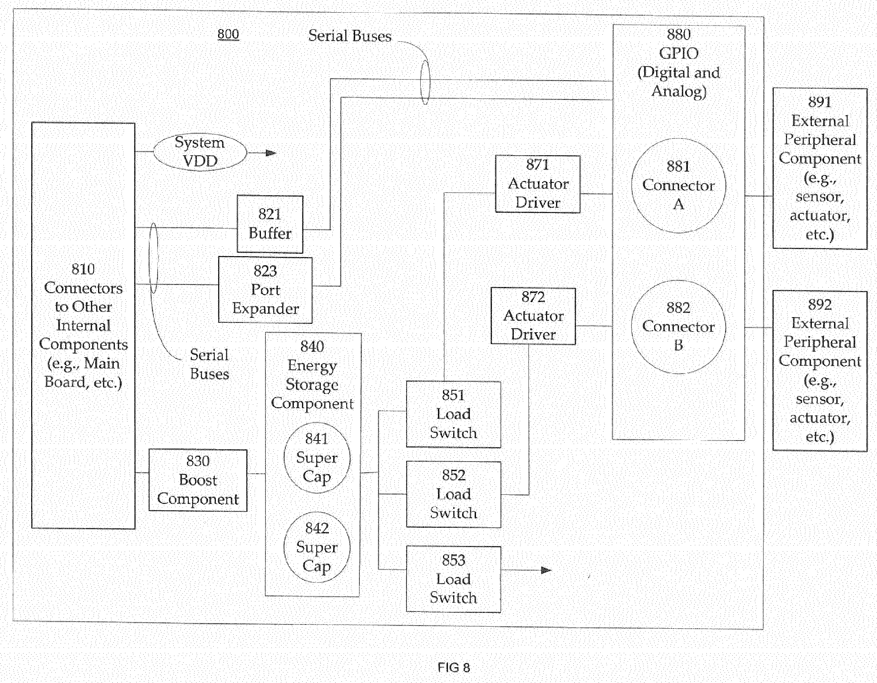

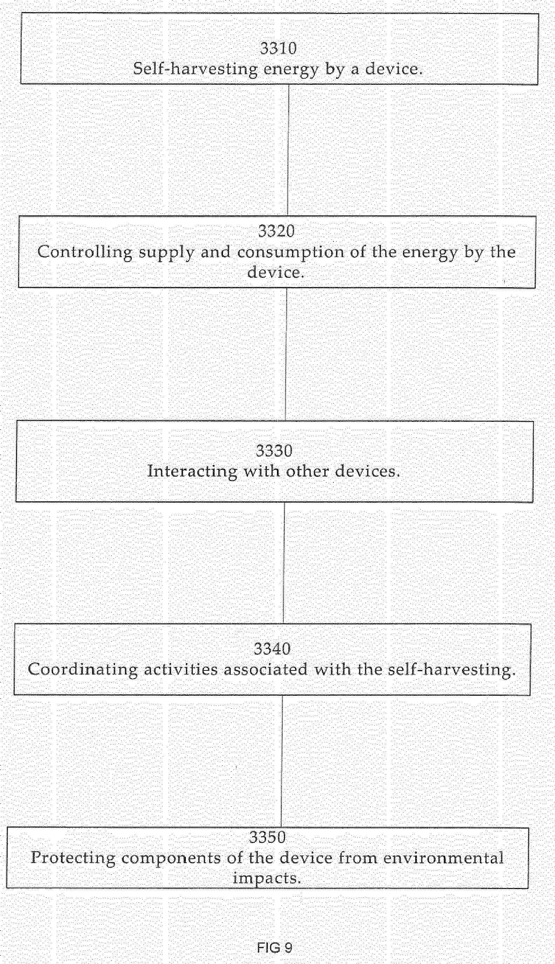

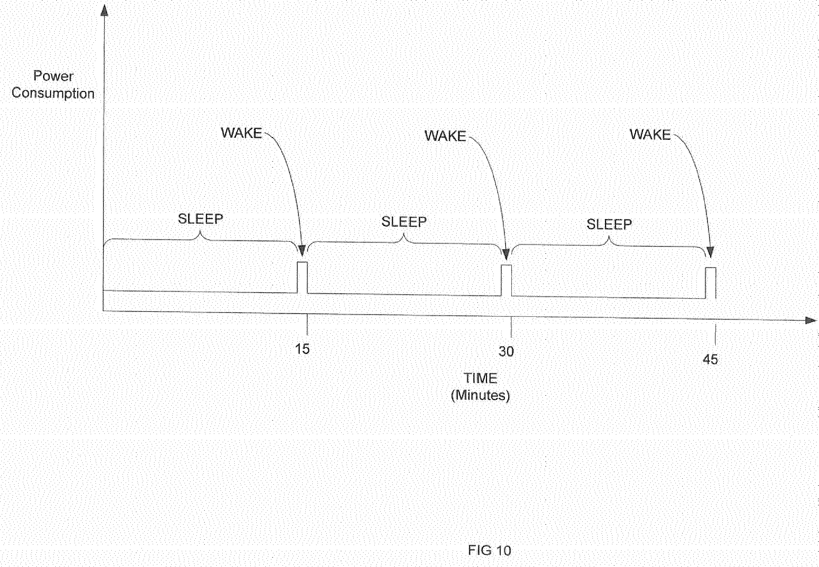

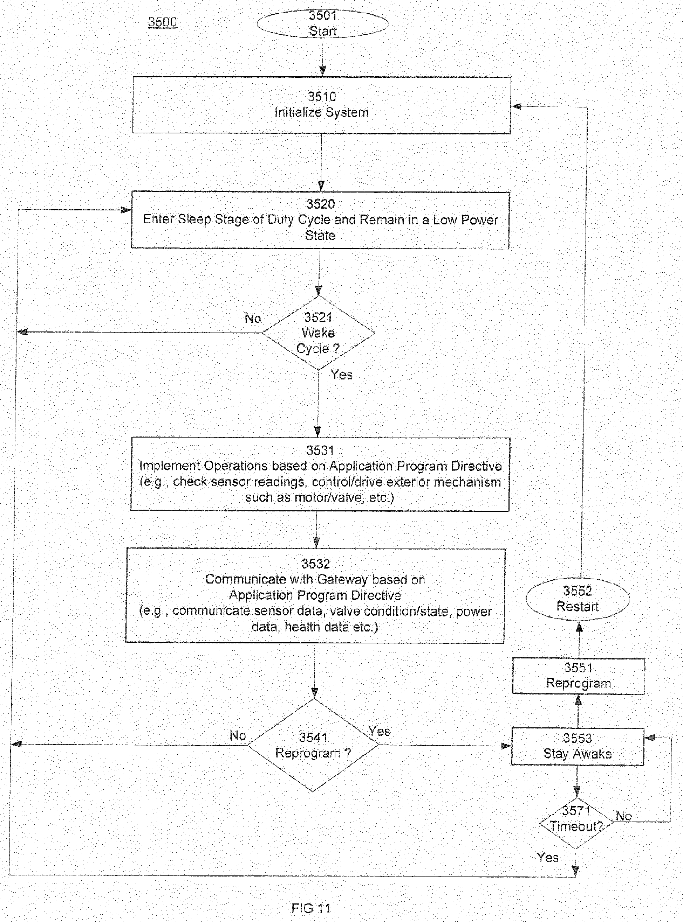

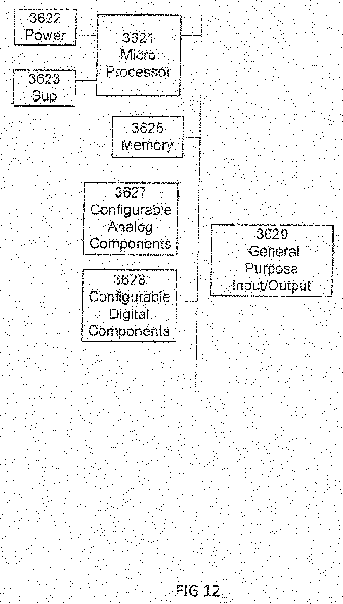

. The accompanying drawings together with the description are incorporated in and form a part of this specification. They illustrate exemplary embodiments and explain exemplary principles of the disclosure. They are not intended to limit the present invention to the particular implementations illustrated therein. The drawings are not to scale unless otherwise specifically indicated.
. Figure 1A is a block diagram of an exemplary power self harvesting control device 110 in accordance with one embodiment.
. Figure 1B is a block diagram of an exemplary power self harvesting control device enclosure main body portion in accordance with one embodiment.
. Figure 1C is a block diagram of an exemplary interior of a power self harvesting control device in accordance with one embodiment.
.Figure 1D is a block diagram of an exemplary power self harvesting control device designed for remote field installation in accordance with one embodiment.
. Figure 2 is a block diagram of an exemplary system including a power self harvesting control device and communication networks in accordance with one embodiment.
. Figure 3 is a block diagram of a power self harvesting control device designed for remote field installation used in an exemplary irrigation implementation in accordance with one embodiment.
. Figure 4 is a block diagram of exemplary multiple control box implementation system in accordance with one embodiment
. Figure 5 is an electronics block diagram of an exemplary power self harvesting control device designed for remote field installation in accordance with one embodiment.
. Figure 6 is a block diagram of an exemplary exterior function interface sub system in accordance with one embodiment for a power self harvesting control device designed for remote field installation.
. Figure 7 is a block diagram of an exemplary exterior function interface subsystem associated with a power self harvesting control device designed for remote field installation in accordance with one embodiment.
. Figure 8 is an exemplary flow chart of a method in accordance with one embodiment.
. Figure 9 is graphical illustration of an exemplary duty cycle in accordance with one embodiment.
.Figure 10 is a flow chart of an exemplary power self-harvesting control method in accordance with one embodiment.
. Figure 11 illustrates a block diagram of electrical components of the power self harvesting control device designed for remote field installation in accordance with an embodiment of the present invention.
. Figure 12 is a block diagram of an exemplary programmable microprocessor in accordance with one embodiment.

### DETAILED DESCRIPTION OF THE INVENTION

. Reference will now be made in detail to the preferred embodiments of the invention, examples of which are illustrated in the accompanying drawings. While the invention will be described in conjunction with the various embodiments, it will be understood that they are not intended to limit the invention to the various embodiments. On the contrary, the invention is intended to cover alternatives, modifications and equivalents, which may be included within the spirit and scope of the invention as defined by the appended claims. Furthermore, in the following detailed description of the present invention, numerous specific details are set forth in order to provide a thorough understanding of the present invention. However, it will be obvious to one ordinarily skilled in the art that the present invention may be practiced without these specific details. In other instances, well known methods, procedures, components, and circuits have not been described in detail as not to unnecessarily obscure aspects of the current invention.

. Presented systems and methods facilitate efficient and effective monitoring and control of various conditions and activities. The systems and methods are configured based upon conditions and requirements of various applications and activities. In one embodiment, features and characteristics of a device (e.g., operations, power supply, enclosure, programming, mounting, placement, etc.) are compatible with constraints and conditions of application and activity environments. In one embodiment, applications and activity environments impact power availability and the presented systems and methods utilize self-harvested power stored in power reserves (e.g., super capacitors, etc.) to perform various operations (e.g., associated with the monitoring, control, communicating, programming, etc.). In one embodiment, the systems and methods are configured of the control device to protect against various environmental hazards (e.g., corrosion, physical contact/impact, temperature, stress, etc.) that can detrimentally impact performance. The systems and methods can also be configured to facilitate convenient and efficient maintenance of the remote control device (e.g., via remote communication, long life expectancy, reprogramming, simplistic external interaction mechanisms, tamper proof features, economical replacement, etc.).

. In one embodiment, systems and methods are utilized in association with irrigation applications and activities as an example of the design and construction of the remote controller device. It is appreciated that such use in irrigation, e.g., for valve control and water sensing, is but one exemplary use of the device. The device, or control device, or control box or control and sensing device, or remotely installed device, or power self harvesting control device designed for remote field installation is generally described as follows. It is a relatively small device, e.g., 100mm by 100mm by 70mm in one embodiment, designed for remote in-field installation, e.g., an orchard or other agricultural environment. The device wirelessly communicates to an in-field installed base station which communicates back to a cloud based remote server. Multiple devices can communicate with the same base station. The device is designed such that its internal electronic components are water protected and its internal components are further sealed from the outside environment. The device is fabricated such that it wears over time well against external environmental conditions expected of the in-field installation. The device is capable of self harvesting power and storing that power for its functionalities, e.g., sensing, control, processing and communication, etc. The device has ports for controlling external components (e.g., valves) and for receiving inputs from external components, e.g., water and other sensors. The programing and logic of the device are reprogrammable wirelessly and contains communication circuitry, memory, and a processor as well as power storage components, e.g., capacitors. From top to bottom, the device is designed to be placed in-field over long durations without any substantial manual service requirements. The device is designed to be located and sized such that it does not interfere with expected machinery of the in-field installation.

. More specifically, as an irrigation control and sensing device, the device can include power self harvesting, power regulation, soil moisture monitoring, wireless communication and water supply control. The device enclosure (e.g., size, material, sealants, potting, etc.) enables the device to be mounted in a convenient location that does not interfere with other external agricultural activities (e.g., harvesting, fertilizing, trimming, plowing, planting, etc.) while protecting against environmental hazards associated with the location and activities (e.g., moisture, chemicals, physical impacts, etc.).

.The self harvesting power features enable the device to operate in the irrigation application and activity environment while avoiding detrimental impacts associated with external power supply components (e.g., digging up, cutting, tangling up with other equipment, etc.) in similar irrigation environments. The robust/hardened features, the information processing capabilities, and the remote communication features of the device can also facilitate simplified and improved maintenance. In one embodiment, the enclosure and components are configured to divide maintenance and trouble shooting activities into simplified tasks (e.g., wiping solar panel with cloth, observing and reporting exterior physical damage, etc. during mission mode) to be performed by non-skilled users and less frequently performed and more complicated tasks by specialists/technicians (e.g., remote reconfiguration, etc.).

. Figure 1A is a block diagram of an exemplary power self harvesting control device 110 in accordance with one embodiment. The power self harvesting control device 110 enclosure includes a main body portion 111 and a cover 112. When operational in the field the cover 112 and main body 111 are coupled together. In one embodiment, the power self harvesting control device 110 has a mating component 114 (e.g., lip, channel, groove, etc.) to assist the coupling of the cover 112 with the main body 111. It is appreciated there are a variety of configurations that facilitate coupling of the main body portion 111 and a cover 112. Power self harvesting control device 110 can include coupling components 113 (e.g., screws, rivets, etc.) for securing the cover 112 and the main body 111 tightly together. In one exemplary implementation, the mating component 114 can be secured with a glue/bonding type material for permanently coupling the main body 111 and cover 112. The mating component 114 can include material with sealant characteristics that protect against elements that can adversely effect the power self harvesting control device 110 (e.g., corrosive elements, moisture, dirt, atmospheric pressure, etc.).

.It is appreciated power self harvesting control device 110 enclosure components can include rugged/hardened characteristics and features that facilitate survivability and long life in harsh environments. The configuration of the power self harvesting control device 110 enclosure, including material used to form the enclosure, can offer various protections to facilitate the accurate operation and longevity of the power self harvesting control device 110. The power self harvesting control device 110 enclosure can protect the interior components from various threats. The power self harvesting control device 110 enclosure can protect against adverse impacts associated with physical contact (e.g., from machinery, worker, animals, corrosive elements, etc.). In one embodiment, the power self harvesting control device 110 enclosure can protect against adverse corrosive elements (e.g., moisture, water, gases, etc.). The enclosure can include a UV resistant material. The enclosure can include a shock resistant material. The enclosure can include radio frequency (RF) transparent material.

.Power self harvesting control device 110 can also include various components coupled to exterior portions of the enclosure. In one embodiment, a power self harvesting component 115 (e.g., a solar cell component, an air/fluid flow component, etc.) is coupled to the exterior of power self harvesting control device 110. Power self harvesting control device 110 can have connector/interface components (e.g., 117, 118, etc.) coupled to exterior portions of the enclosure.

.Power self harvesting control device 110 can include access features (e.g., openings, holes, etc.) to allow components coupled to the exterior of power self harvesting control device 110 access to the interior power self harvesting control device 110. In one embodiment, various components (e.g., wires, leads, etc.) that are coupled to interior components and exterior components penetrate the access features. In one embodiment, a component coupled to the exterior covers an access feature. In one exemplary implementation, the component covering the access feature is secured to the enclosure in a configuration that restricts penetration or entry by foreign materials through the access feature by unwanted/harmful elements (e.g., moisture, liquids, gases, corrosive elements, fertilizer, small insects/organisms, dust, solids, dirt, pollen, etc.). In one embodiment, components coupled to the enclosure (e.g., energy harvesting device, connectors, etc.) can be sealed to the enclosure with a pressure sensitive adhesive (PSA). In one embodiment, components coupled to the control box enclosure can include a protective cover. In one exemplary implementation, a power self harvesting component includes a solar panel that includes a gorilla glass cover layer.

. Figure 1B is a block diagram of an exemplary power self harvesting control device 110 enclosure main body portion. In one embodiment, the enclosure is configured based upon an application and to be compatible with a corresponding environment. In one exemplary implementation, an enclosure utilized in an irrigation related application is configured to be sufficiently small enough to avoid impacts associated with other activities in the environment (e.g., harvesting, pruning/trimming, plowing, fertilizing, etc.). In one embodiment, the enclosure exterior dimensions are 100mm by 100mm by 70mm. In one embodiment, the enclosure in Figure 1B includes an access opening 5 that is operable to be covered by a solar cell device and openings 2 and 3 for that are operable to be covered by connector. Wires coupled to the solar cell device and connectors have access to the interior of the enclosure through the respective openings (e.g., 5, 2, and 3).

. Figure 1C is a block diagram of an exemplary interior of a power self harvesting control device 120 in accordance with one embodiment. In one exemplary implementation, the enclosure of power self harvesting control device 120 is similar to the enclosure of power self harvesting control device 110 described above. Power self harvesting control device 120 includes an energy self harvesting component 121 and connectors 122 and 123. Power self harvesting control device 120 also includes a first printed circuit board 130, a second printed circuit board 140, and a communication antenna 139. First printed circuit board 130 includes components (e.g., circuitry 131, 132, etc.) associated with exterior functions. The exterior functions can include sensing exterior environment conditions (e.g., soil moisture, sunlight, wind, temperature, etc.) and controlling/driving exterior component operations (e.g., opening a valve, closing a valve, etc.). Second printed circuit board 140 includes component 142 associated with communications, component 141 associated with command and control, component 143 associated with energy harvesting and components 144, 145, 18, 148 associated with energy storage.

. It is appreciated that components included in power self harvesting control device 120 can operate in different voltage/power domains. In one embodiment, components included on first printed circuit board 130 are primarily operate at a first voltage level while command and control components included on second printed circuit board 140 operate at a second voltage level. In one exemplary implementation, the first voltage level is approximately 2.5 volts and the second voltage level is approximately 5.0 volts. In one embodiment, a portion of power sub-system components included on second printed circuit board 140 operate at the first voltage level and another portion of power sub-system components included on second printed circuit board 140 operate at the second voltage level.

.In one embodiment, a power self harvesting control device includes interior protection components/features. In one exemplary implementation, a control box includes potting material disposed to cover the plurality of super capacitors, the control electronics, the wireless communication device, and the input/output circuitry. The potting material can be operable to provide various types of protection. In one embodiment the pot material can prevent elements/particles (e.g., water, corrosive elements, dirt particles, etc.) from entering the interior space and from reaching internal components (e.g., the plurality of super capacitors, the control electronics, the wireless communication device and the input/output circuitry, etc.). The potting material can also help absorb shocks or forces associated with external exterior physical contacts.

.Figure 1D is a block diagram of an exemplary power self harvesting control device 199 in accordance with one embodiment. Power self harvesting control device 199 includes a power sub-system 150, a management sub-system 160, an exterior function interface sub-system 170, an internal monitoring sub system 180, and a communication sub-system 190. Power sub-system 150 is configured to self-harvest energy while avoiding reliance on external energy supplied from other devices and power sources. In one embodiment, the power sub-subsystem includes a self contained energy storage component that stores self-harvested energy. In one exemplary implementation, the self contained energy storage component is non-removable. The communication sub-system 190 is configured to communicate with other devices wirelessly. Exterior function interface sub-system 170 is configured to handle input/output signals associated with the exterior component interactions, e.g., control devices, receive sensor data, etc. The management sub-system 160 is configured to manage and coordinate activities of the power control sub-system, the communication sub-system, and exterior function control sub-system. The management can include managing and coordinating supply and consumption of the self-harvested energy. In one embodiment, management sub-system 160 is reprogrammable and reconfigurable. It is appreciated the reprogramming can include various communication methods and mediums (e.g., wired, wireless, etc.).

.It is appreciated the power self harvesting system 199 can be utilized in a variety applications and environments. The power self harvesting device 199 can be utilized in situations where implementation of external power supply is difficult or impractical. In one embodiment, the power sub-system 150 includes a self-harvesting energy component 151 and a non-removable self contained energy storage component 152. Self-harvesting energy component 151 generates or harvests energy locally. The locally generated energy is sufficient to operate the power self harvesting device 199 under normal conditions. In one embodiment, component 151 includes a solar panel. Non-removable self contained energy storage component 152 receives the energy generated/harvested by self-harvesting energy component 151 and stores the energy for utilization in the operation of the components of power sub-system 150. In one embodiment, component 152 is one or more capacitors. The power sub-system 150 supplies power to components of the power self harvesting device 199, including management sub-system 160, communication sub-system 190, and exterior function interface sub-system 170. The power sub-subsystem 150 can direct power supply from the non-removable self contained energy storage component to other components included in the power self harvesting device.

. The harvesting and distribution of the generated and stored self harvested power and energy can be based upon the nature and characteristics of the applications and activities the power self harvesting device 199 is engaged in. In one embodiment, the control electronics operate at a low voltage level for power conservation (e.g., 2.2 volts in one implementation) and the input/output circuitry operates at a standard digital voltage (e.g., 5 volts in one implementation) compatible with remote electronics. The amount of energy/power that is required to be harvested and stored to perform can be based on a task. It is appreciated there can be different tasks and corresponding different amounts of energy/power that is harvested and stored. The task and amount of energy/power can differ within an application. The task and amount of energy/power can differ across different applications. An irrigation task within a particular agricultural application can involve different energy/power requirements than a fertilizing task within that particular agricultural application. An irrigation task associated with a particular corn growing agricultural application can involve can involve different energy/power requirements than an irrigation task associated with a particular walnut growing agricultural application. An irrigation task associated with a particular agricultural application can involve different energy/power requirements than an irrigation task associated with a particular gardening application. An irrigation task associated with a particular agricultural application can involve different energy/power requirements than motion detection task associated with a particular security application.

. In one embodiment, the power self harvesting device 199 can be in a partial or complete shut down and operations of the sub-systems can be initiated in response to a trigger event. The trigger event can be associated with the applications and activities the power self harvesting device 199 is engaged in. The trigger event can be a change in a sensed/monitored metric (e.g., level of moisture, movement, etc.). The change can be associated with a threshold or amount of difference. The threshold or amount of difference can be set based upon an application or activity/task. A detected moisture level in a first agricultural growing application (e.g., growing corn, growing walnuts, etc.) that triggers a power up and participation in a task can be different than a moisture level in second agricultural growing application (e.g., growing lettuce, growing apples, etc.) that triggers a power up and participation in a task.

.It is appreciated the self-harvesting energy component 111 can include various components that are capable of harvesting energy (e.g., a solar cell component, wind/air flow turbine/propeller component, water flow component such as a propeller, water wheel, or so on, a pressure differential component, alpha particle battery, a radiation source, a temperature differential harvesting solution, a power coupling solution, kinetic energy recovery (KER) system, temperature differential solution, inductive power coupling, passive energy harvesting mechanism, active energy harvesting, etc.). The self-harvesting energy component 111 can include protective features/components. In one embodiment, a solar cell component includes a protective cover component that is a glass material (e.g., gorilla glass, etc.). The glass material is particularly well suited to last over time against damage from wind blown particles that are expected in certain in-field agricultural installations, e.g., sand, pollen, etc.

. It is appreciated the non-removable self contained energy storage component 152 can include various components. The non-removable self contained energy storage component 152 can include a super capacitor. The non-removable self contained energy storage component can be re-charged with energy from the self-harvesting energy component. The energy storage component is capable of electronically reporting its energy reserve to the management sub-system 160.

.In one embodiment, power self harvesting control device 199 can optionally receive externally generated power/energy under special conditions (e.g., testing, maintenance, etc.).

. In one embodiment, the self harvested energy can be utilized by exterior components (e.g., exterior components not directly included in the power self harvesting device 199, etc.). Power sub-subsystem 150 can direct a supply of power from the non-removable self contained energy storage component 152 to other components exterior to the power self harvesting device. The exterior components can be communicatively coupled to the power self harvesting device 199 via exterior function interface sub-system 170. In one embodiment external coordination component 171 coordinates control and drives activities of external components. The control of the external components can be based upon directions received from management sub-system 160.

. Management sub-system 160 can control other components of power self harvesting control device 199. Management sub-system 160 includes processing component 161 and memory 162. In one embodiment, the management sub-system 160 can include a programmable microprocessor component. The programmable microprocessor component can include a Field Programmable Gate Array (FPGA) component and a memory component. In one exemplary implementation, the management sub-system 160 can include a Programmable Microprocessor System on a Chip (PSOC) component.

. In one embodiment, a power self harvesting control device (e.g., 110, 120, 199, etc.) is an internet of things (IoT) enabled device. In one embodiment, a power self harvesting control device (e.g., 110, 120, 199, etc.) is operable to communicate with the internet. In one exemplary implementation, a power self harvesting control device (e.g., 110, 120, 199, etc.) is operable to communicate with the cloud.

. Figure 2 is a block diagram of an exemplary system including a power self harvesting control device in accordance with one embodiment. The system includes a remote component 210, a network 220, control box 230, instrumentation component 235, and control component 237. In one embodiment, control box 230 is a power self harvesting device as described herein. In one exemplary implementation control box 230 is analogous to power self harvesting device 199. In one embodiment, instrumentation component 235 is a sensor for monitoring a condition or activity (e.g., moisture content, movement, etc.). Instrumentation component 235 can forward information to control box 230 either digitally or in analog format over a physical cable connected to the control box 230. In one embodiment, instrumentation component 235 can receive information from control box 230. Control component 237 is configured to engage in an external activity or task (e.g., turn a valve, move an object, etc.) under control from control box 230 connected thereto via physical cable in one embodiment. The control component 237 can perform the activity or task under the direction of control box 230. In one exemplary implementation, control component 237 performs the activity or task based upon information from instrumentation component 235. It is appreciated remote component 210 can include various types of components (e.g., cloud based remote server, user interface, central database, etc.). It is appreciated network 210 can include various components (e.g., the cloud, the internet, communications infrastructure, servers, databases, etc.). It is appreciated a power self harvesting device can be included in or part of the internet of things (IoT).

.In one embodiment, control box 230 is a node communicatively coupled to network 220, e.g., via wireless communication. In one embodiment, control box 230 is a node communicatively coupled to network 220 via direct cellular communication between the control box 230 and network 220. In one embodiment, control box 230 is a node communicatively coupled to network 220 via gateway 250. In one exemplary implementation, gateway 250 includes an antenna 251, power supply 253 (e.g., power self harvesting component, battery, external power source. etc.) and communication controller 252. Remote component 210 can also be communicatively coupled to wireless network 220.

. Control box 230 and remote component 210 can communicate with each other via wireless network 220. Control box 230 can provide information (e.g., related to instrumentation information, control information, power consumption information, other information regarding the operations of control box 230, etc.) to remote component 210. Remote component 210 can provide information (e.g., directions related to instrumentation, control power consumption, control box programming/reconfiguration, other information regarding the operations of control box 230, etc.) to control box 230. The information from remote component 210 can be based upon results of processing the information received from the control box 230. In one embodiment, the remote interface 210 receives updates/changes to information associated with instrumentation and control from control box 230. The remote interface 210 can process the received information and provide updated directions to control box 230. It is appreciated that remote component 210 may additionally communicate with a cloud based server via another wireless network, e.g., a cellular network, for instance.

. It is appreciated that a power self harvesting control device can be utilized in various applications and activities. In one embodiment, a power self harvesting control device can be utilized in irrigation applications and activities. Figure 3 is a block diagram of an exemplary irrigation implementation in accordance with one embodiment. Control box 320 is a power self harvesting control device located under some form of plantea (e.g., bush, plant, vegetation, tree, shrub, stalk, etc.) 310. In one embodiment, control box 320 is self mounted/supported by member 371 (e.g., pole, structure, irrigation pipe, etc,). The control box 320 is designed to communicate with wireless communication network 220 even if disposed low to the ground. In one embodiment, low to the ground is 1.5 feet or less above the ground. In one exemplary implementation, control box 320 is located low to the ground under portions of plantea (e.g., a bush, plant, tree, etc.) and can communicates with network cloud 370. The communication can be direct cellular communication or via gateway 390. Sensor 325 senses conditions of the soil 350 (e.g., moisture, nitrogen content, other hydration indicators, other fertilization indicators, etc.) and provides information regarding the sensed conditions (e.g., level of moisture, percentage of fertilizer, etc.). Control box 320 receives and processes the information from the sensor 325 via a cable in one embodiment. Based upon the results of the processing, control box 320 forwards directions (e.g., open, close, etc.) to valve 327 which controls water flow into the soil 350. In one embodiment, valve 327 implements the directions of control box 320 via a cable interface in one embodiment. The directions can include opening/closing the valve 327 to allow/prevent water flow from irrigation pipe 340. In one exemplary implementation, valve 327 utilizes a portion of its self harvested power to drive the operations of valve 327. It is appreciated the sensor 325 and valve 327 can also be disposed low to the ground and also in close proximity to the plantea 310.

.It is appreciated that a plurality of power self harvesting control boxes can be utilized (e.g., in a field, a forest, a garden, an orchard etc.) to control irrigation (e.g., across the field, forest, garden, orchard, etc.). Figure 4 is a block diagram of exemplary multiple control box implementation system in accordance with one embodiment. The multiple control box implementation system includes control boxes 410, 420, 430, 440, 450, and 470, sensors 411, 421, 431, 441, 451, and 471, valves 412, 422, 432, 442, 452, and 472, gateway 481, network 482, a user interface 483, and remote component 484. Control boxes 410, 420, 430, 440, 450, and 470 are power self harvesting control devices (e.g., similar to other power self harvesting devices described herein). Control boxes 410, 420, 430, 440, 450, and 470 are communicatively coupled to sensors 411, 421, 431, 441, 451, and 471 respectively. Control boxes 410, 420, 430, 440, 450, and 470 are communicatively coupled to valves 412, 422, 432, 442, 452, and 472 respectively. Control boxes 410, 420, 430, 440, 450, and 470 are can be communicatively coupled to network 482. Control boxes 410, 420, 430, 440, 450, and 470 can be coupled to network 482 directly via cellular communications. Control boxes 410, 420, 430, 440, 450, and 470 can be coupled to network 482 via gateway 481. Gateway 481 may communicate with network 482 via various mediums/mechanisms/modalities (e.g., wirelessly, wired, telecommunication systems, cellular, etc.).

.It is appreciated user interface 483 and remote component 484 can communicate with network 482 via various mediums/mechanisms/modalities (e.g., wireless, wired, telecommunication systems, cellular, etc.). In one embodiment, control boxes 410, 420, 430, 440, 450, and 470 communicate with user interface 483 and remote component 484 (e.g., via network 482). A user interface can be associated with a local user (e.g., a local farmer, a security patrol guard, etc.) or a remote user (e.g., a manufacturer of the control boxes, a government facility, etc.).

. Control boxes 410, 420, 430, and 440 receive information from sensors (e.g., 411, 421, 431, and 441) and direct control of valves (e.g., 412, 422, 432, and 442). In one embodiment, control boxes 410, 420, 430, and 440 operate similar to control box 230 and 320. Sensors 411, 421, 431, and 441 monitor conditions and characteristics of the soil (e.g., similar to instrumentation component 235, sensor 325, etc.). The conditions and characteristics can include moisture content, fertilization levels, and so on. Valves 412, 422, 432, and 442 open and close to direct flow of liquid to the soil (e.g., similar to control component 237 and valve 327). Control box 450 can direct valve 452 to dispense fertilizer into the irrigation pipes based upon input from gateway 481. Sensor 451 can provide control box 450 information on the level of fertilizer which can be forwarded to the local user via control box 450, gateway 481, and cloud 482. Control box 470 can direct valve 472 to dispense water into the irrigation system based upon input from gateway 481. Flow monitor/power generator 471 can provide feedback information to control box 470 on measurement of actual water flow into the pipes of the irrigation system.

. It is appreciated that self harvesting power can originate from various sources. Control boxes 410, 420, 430, and 440 harvest energy/power from solar cells. Control box 450 harvest energy/power from a wind turbine. Control box 470 can harvest energy/power from characteristics of the fluid in the irrigation pipes (e.g., flow through a propeller, pressure differential, etc.). In one embodiment, control box 470 can self harvest energy/power from multiple components concurrently (e.g., solar, characteristics of the fluid in the irrigation pipes, etc.). In one embodiment, control box 470 can utilize self harvest energy/power (e.g., solar, etc.) and energy/power generated locally (e.g., from an external flow monitor/power generator 471, etc.).

. Figure 5 is a block diagram of design components of an exemplary power self harvesting control device 500 in accordance with one embodiment in more detail. Power self harvesting control device 500 includes power sub system 510, management sub system 520, exterior function interface sub-system 530, communication sub-system 550, and internal monitoring sub-system 570. Management sub system 520 is coupled to power sub system 510, exterior function interface sub-system 530, communication sub-system 550, and internal monitoring sub-system 570.

.Power sub-system 510 includes solar cell component 511 coupled to charger/converter 512 which in turn is coupled to super capacitor sub-system 513. Solar cell component 511 includes a solar cell configured to covert sun light and IR radiation into electricity. The electricity from solar cell component is fed into charger/converter 512 which extracts energy from the solar component. In one embodiment, the charger/converter 512 extracts microwatts to milliwatts of energy. The charger/converter 512 can boost the extracted energy to an appropriate voltage level for charging the super capacitors of the super capacitor sub-system. In one exemplary implementation, the charger/converter 512 can also include a buck component to regulate a voltage level supplied directly to other components of the power self harvesting control device 500.

. In one embodiment, charger/converter 512 controls delivery of power from the super capacitors to the rest of the power self harvesting control device 500. In one exemplary implementation, charger/converter 512 does not allow other components in power self harvesting control device 500 to turn on unless there is sufficient power available. In one exemplary implementation, charger/converter 512 can also initiate measures to safely power down components of power self harvesting control device 500 before sufficient power runs out or is unavailable. In one embodiment, a bottom end threshold for the rest of the system is approximately 2.2 volts. In one embodiment, microprocessor 521 can also tack and react to low/critical power levels. In one exemplary implementation important information (e.g., state/condition of power self harvesting control device 500 components, state/condition of external components, information associated with application program directives, etc.) is safely stored before power is lost. The information can be stored in RAM or FLASH memory in the management sub-system 520. The information can also be communicated remotely (e.g., a remote server, a cloud server, etc.).

. Management sub-system 520 includes a microprocessor. In one embodiment, the microprocessor 521 can be a bluetooth low energy (BLE) compatible component/module. Microprocessor 521 can direct management of various operations of power self harvesting control device 500. In one exemplary implementation, microprocessor 521 includes a microprocessor core. The microprocessor core can include a microprocessor, memory, and reconfigurable communication buses and other reconfigurable circuitry all integrated within a common integrated circuit. The microprocessor core can direct management of various operations of external components (e.g., components communicatively coupled to exterior function interface sub-system such as sensors, valves, etc.). The microprocessor 521 is fully reprogrammable. In one embodiment microprocessor 521 is a Programmable System on Chip (PSOC).

. Processor 521 includes a VDD interface to receive power from the power sub system 510. Microprocessor 521 includes a general purpose input/output (GPIO) interface. The GPIO interface can be analog to Analog to Digital Converter (ADC) protocol and Universal Asynchronous Receiver Transmitter (UART) protocol compatible. The GPIO interface can communicatively couple with exterior function interface sub-system 530. Microprocessor 521 can include an Inter-Integrated Circuit (I²C or I2C) protocol compatible interface for communicatively coupling with communication sub-system 550 and internal monitoring sub-system 570.

. The exterior function interface sub-system 530 controls input/output (IO) functionality and as such includes external coordination component 531 and external ports 532. External coordination component 531 can perform various coordination functions for interaction with exterior components including receiving signals as input and generating signals for output. In one embodiment, external coordination component 531 includes converter 532 that converts signals to an appropriate level compatible with exterior devices. In one embodiment, external coordination component 531 configures signals for driving external components and for receiving sensor data from external components. External ports 532 are physical interfaces for communicatively coupling to external components.

. Communication sub system 550 is operable to communicate with external communication components/networks via wireless network 220. Communication sub system 550 includes long range (LoRa) module 551. In this embodiment, communication sub system 550 communicates with other components (e.g., gateway 250, gateway 390, network 220, network 370, etc.) via LoRa communications. The long range (LoRa) module 551 can include a XDOT NA compatible chip. In one embodiment, communication sub system 550 device can perform wireless communication of the power self harvesting control device 500 and is controlled by the programmable microprocessor. In one embodiment, communication sub-system 550 is utilized to communicate information associate with programming the programmable microprocessor.

. Internal monitoring sub-system 570 can monitor internal conditions. Internal monitoring sub-system 570 can include a light sensing component configured to sense light exposure to the interior of the power self harvesting control device 500. The detection of light can be used to indicate opening/tampering with the enclosure of the power self harvesting control device 500. Internal monitoring sub-system 570 includes a humidity and pressure sensor configured to sense humidity and pressure exposure to the interior of the power self harvesting control device 500. The detection of moisture and pressure can be used to indicate a sealant failure in an opening/port to the interior of the power self harvesting control device 500.

. In one embodiment, power self harvesting control device 500 includes features to prevent unauthorized access to information. In one embodiment, internal communication buses prevent snooping of communications within the power self harvesting control device 500. In one exemplary implementation, I2C buses are used for communicating information.

.It is appreciated the components of power self harvesting control device 500 can cooperatively operate to manage power generation and consumption. In one embodiment, the management sub-system 520 can anticipate the power needs and provide relevant information to other components of power self harvesting control device 500. In one exemplary implementation, the management sub-system 520 determines the relevant characteristics/requirements of a task or operation (e.g., amount of energy needed to perform the task, the timing related information such as when will the task occur, how long/duration of the task, etc.). The operation can be internal (e.g., tasks/processing performed by management sub system 520, power sub-system 510 external coordination component 531, communication sub-system 550, etc.).

. The management sub-system 520 can utilize information received from various sources in determining the relevant characteristics/requirements of a task or operation. The management sub-system can receive information (e.g., application/program directives, etc.) from an upstream component (e.g., the cloud, a remote server, etc.). The management sub-system can receive information from external peripherals (e.g., soil moisture sensor, day light sensor, status of a peripheral state/operation, a value is closed, a value is part way through process of opening, amount of energy currently being generated by an energy generation component, energy generation from a solar cell, etc.).

. In one embodiment, based information the received information the management sub-system 520 can determine the need for an operation to occur. The management sub-system 520 can determine which operation is to be performed. The management sub-system 520 can determine timing characteristics associated with an operation (e.g., when it needs to occur, the duration of the operation, etc.). The need/timing can be triggered by various things including a scheduled periodic initiation, an external environment related initiation (e.g., moisture level trigger, available day light, etc.), external peripheral component (e.g., open valve condition, energy level being produced by an energy generation component, etc.).

. In one embodiment, based on power consumption characteristics of an operation the operation management sub-system 520 can determine the amount of energy needed and provide direction on energy generation and storage. Management sub-system 520 can receive information on the power consumption characteristics from various sources, including a remote component (e.g., the cloud, a remote server, etc.) and a peripheral component (e.g., a monitor component, a motor component, a moisture detector, a valve, etc.). In one embodiment, management sub-system 520 can send information to other components, including power sub-system 510 and external coordination component 531, regarding aspects of power generation/storage (e.g., information on commencing and ending power generation/storage, amount of energy to generate/store, etc.).

. In one embodiment, management sub-system 520 can direct power sub-system 150 to regulate the power generation/storage within certain thresholds. In one exemplary implementation, low end energy generation and storage thresholds are set to provide enough energy/power to perform operations and high end energy generation and storage thresholds are set to maintain/facilitate component longevity. The energy generation and storage thresholds can be set to comply with safety concerns.

. In one embodiment, management sub-system 520 can direct power consumption. The power consumption can be associated with internal operations and external peripheral component operations. In one exemplary implementation, management sub-system 520 receives information on a status of energy generated and stored by power sub-system 150. If there is sufficient energy to perform an operation, management sub-system 520 can direct initiation of an operation (e.g., programming, monitoring, communication, execute peripheral device function, drive motor, etc.). The communication can be with remote upstream components (e.g., a remote server, the internet, a cloud component, etc.). The communication can be with local downstream components (e.g., a peripheral device, a monitor, a motor, etc.).

.In one embodiment, exterior function interface sub-system 170 includes energy storage components. The energy storage components can be used to supply power for peripheral component operations. In one exemplary implementation, the energy storage components can include super capacitors. The energy storage components can be similar to other energy storage components in the system (e.g., super capacitors, non-removable, etc.). Management sub-system 520 receives information on a status of energy generated and stored by exterior function interface sub-system 170. If there is sufficient energy to perform an operation, management sub-system 520 can direct initiation of an operation that consumes energy generated and stored by exterior function interface sub-system 170. In one exemplary implementation, management sub-system 520 instructs exterior function interface sub-system 170 to forward the operation initiation directions to a peripheral component and supply power to the peripheral component to perform the operation. The peripheral component operations can include monitoring (e.g., detecting soil moisture, monitoring environmental conditions, detecting motion, etc.) and active functions (e.g., opening a valve, closing a valve, other motor operations, etc.).

. In one embodiment, the amount of energy to perform the peripheral component operation is known and the energy storage components are charged to that amount. During the peripheral component operation energy is drained from the energy storage components (e.g., super capacitors included in the exterior function interface sub system, etc.). In one exemplary implementation, when the peripheral component operation no longer needs energy, the exterior function interface sub system can stop charging the corresponding energy storage components. The charging can be suspended /postponed until needed for a peripheral component operation.

.It is appreciated that different size energy storage components can be utilized. The energy storage components can be coupled in a variety of configurations (e.g., series, parallel, both, etc.). The energy storage components can be sized or configured for operations performed by components operating in a particular domain/partition. The domain/partition can be based on various factors/characteristics (e.g., voltage level. inclusion on a printed circuit board, a particular integrated circuit chip, etc.). In one embodiment, a main printed circuit board includes energy storage components of power sub-system 510 to supply power to components that operate at a first voltage (e.g., 2.0 to 3.0, below 3.0 etc.) and a secondary printed circuit board includes energy storage components of exterior function interface sub system 531 to supply power to components that operate at a second voltage (e.g. 5.0 to 7.0, above 3.0, etc.).

. It is appreciated, management sub-system 520 can direct operations based on various information. Management sub-system 520 can receive information regarding a potential problem condition or state (e.g., unexpected reduced power generation, contradictory indication of measured water flow and closed valve status, etc.). The management sub-system 520 can analyze the information and determine a potential problem. In one exemplary implementation, unexpected reduced power generation during daylight time can indicate a problem with the power generation component (e.g., blocked solar cell by dirt, animal feces, etc.). In one exemplary implementation, contradictory indication of measured water flow and closed valve status can indicated a problem with an irrigation pipe (e.g. broken, leaking, etc.). The management sub-system 520 can perform various operations in response to the potential problems. In one embodiment, management sub-system 520 can forward an alarm warning to another component (e.g., a remote cloud server, a local user/farmer, etc.). In one embodiment, management sub-system 520 can direct protective/preemptive operations. The protective/preemptive operations can include locally storing various information (e.g., programming information, operational conditions, status of peripheral components, environmental conditions, etc.) before a failure occurs.

. Figure 6 is a block diagram of an exemplary exterior function interface sub system 600 in accordance with one embodiment for the controller box. Exterior function interface sub system 600 includes solar cells 610, charger/converter sub system 620, and super capacitor sub-system 630. Solar cells 610 are coupled to charger/converter sub system 620 which in turn is coupled to super capacitor sub-system 630

. Charger/converter sub system 620 includes charging chip 621 and ultra low IDDQ buck 622. Charging chip 621 is coupled to ultra low IDDQ buck 622. In one embodiment, the IDDQ is the supply current IDD in Quiescent state (e.g., when the circuit is not switching and the inputs are held at static value). Output voltage from buck 622 controls the low voltage domain circuitry of the controller chip. In one embodiment, the low voltage domain circuitry is associated with internal circuitry of the controller box not used for I/O functionality.

. Super capacitor sub system 630 includes balancing component 631 and super capacitors 634, 635, 637, 638, and 639. Super capacitors 634, 635, 637, 638, and 639 can be coupled in series and/or in parallel and/or both. It is appreciated that the super capacitors can be different sizes. In one embodiment, super capacitors 634 and 635 are a first size and super capacitors 637, 638, and 639 are a second size. In one embodiment, the larger sized super capacitors are used to power the internal functionality of the controller box while the smaller sized super capacitors are used to control the input/output functionality of the controller box, e.g., control irrigation valves and receive sensor data.

. Figure 7 is a block diagram of a communication sub-system 700 included in a power self harvesting control device in accordance with one embodiment. In one embodiment, communication subsystem 700 is similar to communication sub-system 550. Communication sub-system 700 is coupled to an antenna 720 and a main programmable microprocessor 730. In one exemplary implementation the antenna is an internal antenna. Communication sub-system 700 includes radio components 711 (e.g., transmitter, receiver, transceiver, etc.) and communications processor 712 (e.g., operable to perform signal processing, communication protocol processing, etc,). In one exemplary implementation, the communication sub-system is operable to perform LoRa radio communications.

. Figure 8 is a block diagram of an exemplary exterior function interface subsystem 800 in accordance with one embodiment for performing input/output functionality. The input/output functionality can be associated with exterior peripheral component operations (e.g., monitoring, sensing, driving actuators, etc.). In one exemplary implementation, the exterior function interface subsystem is similar to exterior function interface subsystem 550. Exterior function interface subsystem 800 includes connectors 810 to other internals components, buffer 821, port expander 823, boost component 830, energy storage component 840, load switches 851, 852, and 853, actuator drivers 872, 871, general purpose input/output GPIO components 880. Boost component 830 can receive low voltage input and boost or raise it to a higher voltage level output. Energy storage component 840 can include storage components that store energy used for power supply to external peripheral components. Energy storage component 840 can include super capacitors. In one embodiment, energy storage component 840 stores energy at capacities and levels different than the other energy storage components included in a power self harvesting control device. Load switches 851, 852, and 853 control (e.g., on, off, etc.) of power supply from energy storage component 840. Actuator drivers 872 and 871 supply power to drive actuator operations of peripheral components. A peripheral component actuator can be various types of actuators. In one embodiment, a peripheral component actuator is a valve actuator. GPIO 880 includes connector A 881 and connector B 882. In one embodiment, connector A 881 and connector B 882 are programmable/reconfigurable. Connector A 881 and connector B 882 can be used for digital and analog communications. Connector A 881 and connector B 882 can be various different types of connectors. Connector A 881 and connector B 882 can be coupled to external peripheral component 891 and 892. In one exemplary implementation, connector A 881 is a circular connector for sensor data input and could be either digital or analog in format. Circular connector B 882 is for output to drive irrigation valves and could be either of digital or analog formats.

.In one embodiment, exterior function interface subsystem 800 components are mounted on a separate PCB board from the remainder of the circuitry of the controller box. The other circuitry can is mounted on a separate main PCB board. In one embodiment, the I/O board operates primarily in a first high voltage domain (e.g., for interacting with external peripheral components, etc.) while the main PCB board operates primarily at a second low voltage domain (e.g., for internal power savings, etc.)

.In one embodiment, the controller box is used to measure and control process variables (e.g., water level, pressure, temperature, humidity, water flow, pH, water force, water speed etc.). The controller box can use input from sensors to measure the output performance of the device being controlled and those measurements can be used to give feedback to the input actuators that can make corrections toward desired performance.

. Figure 9 is an exemplary flow chart of a method in accordance with one embodiment that can be executed by the controller box under program control.

. In block 3310, energy is self-harvested by the device.

. In block 3320 energy that is supplied and consumed by the device is controlled.

. In block 3330 interactions with other devices are controlled. In one embodiment, information regarding external environment conditions is received via I/O ports from external sensors. In one embodiment control of external components is controlled based upon the external environment conditions. Interacting with other devices can include instrumentation and control operations associated with an irrigation feedback and control loop. The control and sensing operations of the control box can be completely performed remotely by the box under PSOC control as programmed. Results of any sensor data received and/or work items performed can be logged in memory of the PSOC for rely to the remote sensor via wireless network 220. In one embodiment, this information can be communicated back via network 220 every 15 minutes.

. In block 3340 activities associated with the self-harvesting are coordinated. In one embodiment, the activities include controlling supply of the energy, controlling consumption of the energy, and interacting with other devices. In one exemplary implementation, the coordinating includes collection and storage of the self harvested energy in a non removable storage component and ensuring sufficient energy is available before beginning perform of internal tasks and directing external activities.

. In block 3350, components of the device are protected from environmental impacts including impacts associated with physical contact and intrusion by various particles from the environment. In one embodiment, the impacts associated with physical contact include shock, vibration, compression, and tension. In one exemplary implementation the impacts associated with various particles from the environment include corrosion.

. In one embodiment, a power self harvesting control device is operated in accordance with a duty cycle that facilitates efficient and effective operation and power management. In one exemplary implementation, power self harvesting control device sleep cycle is configured to increase/maximize power/energy harvesting and storage, and the wake cycle is configured to efficiently utilize the power/energy. Figure 10 is graphical illustration of an exemplary duty cycle in accordance with one embodiment. As illustrated in Figure 10 a full time period associated with a duty cycle is 15 minutes with the vast majority of the time (e.g., 95% or more, etc.) being in the sleep state and a small amount in the wake state. The sleep state corresponds to a relatively low power consumption level. In one embodiment, more than 95% of the circuitry is powered off. In one exemplary implementation, the components on an exterior function interface sub-system board are powered off and most of the circuitry on a main board is powered off (e.g., except for a small portion of a management PSOC system and small portion of a communication sub-system, etc).

. Figure 11 is a flow chart of an exemplary power self-harvesting control method 3500 in accordance with one embodiment. In one embodiment, power self-harvesting control method 3500 is implemented on a power self-harvesting control device (e.g., 110, 120, 199,230,320, 500, etc.).

. In block 3501, the method starts.

. In block 3510, the system is initialized.

. In block 3520, a low power state is entered. In one embodiment, the low power state is entered during a sleep stage duty cycle. In one exemplary implementation, the system remains in the low power state for the sleep stage portion of a duty cycle.

. In block 3521, a determination is made whether to enter a wake cycle portion of a duty cycle. The determination can be made based upon an amount of time/duration assigned to a sleep cycle. The determination can be made based upon a trigger event. It is appreciated there can be various trigger events. In one embodiment, the trigger events are associated with an activity. In one exemplary implementation the activity is related to an application. In an irrigation application, the activity can include sensing a threshold value (e.g., a threshold amount of moisture, corrosive material, temperature level, etc.). The threshold value can be associated with a detrimental application outcome (e.g., conditions that can hurt plants such as soil dangerously dry/lacking moisture, external environment temperature adversely high, etc.) and it is desirable for the system to wake and take action (e.g., open water valve, provide fertilizer, notify user/farmer, etc.). The amount of time/duration assigned to a sleep cycle or an environment threshold value can be included in an application program directive. In one embodiment, a communication from an authorized gateway/network access point can trigger a wake cycle. If there is a decision not to enter a wake cycle the process remains in low power state of the sleep cycle. If there is a decision to enter a wake cycle the process proceeds block 3531. In one embodiment, proceeding to block 3531 includes initiating a higher power state.

. In block 3531, operations based on an application program directive are implemented. The operations can include checking sensor readings/data and recording the information in local memory. In one exemplary irrigation application implementation, a soil moisture sensor reading is received and stored in memory. The operations can include controlling/driving an exterior mechanism (e.g., such as motor/valve, etc.). In one exemplary irrigation application implementation, an irrigation system water valve is opened/closed.

. It is appreciated that an exterior device/mechanism that is being controlled can also provide information. In one embodiment, a device/mechanism that is being controlled includes sensors or monitors that forward information (e.g., regarding condition of the device/mechanism, operations of the device/mechanism, etc.). Actions can be implemented based upon the received information and application program directives.

. In block 3532, a communication with a network/cloud access point is engaged. The communication can be implemented based on an application program directive. In one embodiment, the communication with a network/cloud access point is implemented via a gateway. In one embodiment, communication can include the flow of information both upstream to the network/cloud and downstream from the network/cloud. Various types of information can be included in the communications (e.g., sensor data, device condition/state, power data, health data, etc.). The information can include information regarding various components, including components of a power self-harvesting control device, components of an external device (e.g., a valve, a sensor, etc.), and so on.

. In block 3541, determination is made whether to enter a reprogram state. If there is a decision not to reprogram the process remains in/returns to the block 3520 low power state of the sleep cycle. If there is a decision to reprogram the process proceeds to block 3553 and stays awake.

. In block 3571, the process determines if a timeout threshold has been exceeded before reprogram operations have begun. If the timeout has been exceeded the process remains in/returns to the block 3520 low power state of the sleep cycle. If the timeout has not been exceeded the process returns to block 3553 and stays awake.

. In block 3551, a reprogram is performed. The reprogram information can come from a network or cloud via a gateway/network access point.

. In block 3552, a restart is initiated after the reprogram is complete and the process returns to block 3510.

. In one embodiment, a self-contained controller device comprises: an enclosure defining an interior space and comprising a plurality of openings, wherein the enclosure is sealed to restrict water entry to the interior space; an energy harvesting device sealed with respect to a first one of the plurality of openings to restrict water entry to the interior space, the energy harvesting device operable to generate and provide power; a plurality of super capacitors disposed within the interior space and operable to receive and store power generated from the energy harvesting device; control electronics disposed within the interior space and comprising a processor and re-programmable memory, the control electronics coupled to receive power from the plurality of super capacitors and operable for capturing sensor data, operable for generating valve control information and further operable to communicate with a remote control station; a wireless communication device disposed within the interior space and coupled to the control electronics and operable to provide wireless communication for the control electronics; and input/output circuitry operable for generating signals responsive to the control electronics to control exterior valves and further operable for receiving sensor data from exterior sensors, wherein the input/output circuitry is disposed within the interior space and coupled to ports disposed at the second and third openings.

. In one embodiment, the energy harvesting device is a solar panel disposed to cover the first opening and sealed to the enclosure with a pressure sensitive adhesive (PSA) to restrict water entry to the interior space, and wherein further the solar panel comprises a gorilla glass cover layer. The control electronics can operate at a low voltage level for power conservation and wherein the input/output circuitry operates at a standard digital voltage compatible with remote electronics. In one exemplary implementation, the low voltage level is approximately 2.2 volts and wherein the standard digital voltage is approximately 5.0 volts. The plurality of super capacitors can be operable to provide power to the input/output circuitry and to the wireless communication device. In one exemplary implementation, the solar panel and the plurality of super capacitors are configured to provide all power as required by the control electronics, the wireless communication device, and the input/output circuitry during lifetime operations thereof. In one embodiment, the enclosure is sized sufficiently small and the wireless communication device is configured to operate sufficiently low to the ground that the controller device in the field does not substantially obstruct harvesting and/or other agricultural equipment.

. The control electronics can include a programmable system on a chip (PSOC) device. In one embodiment, the PSOC comprises: the processor; and the re-programmable memory, wherein the re-programmable memory comprises instructions that when executed by the processor implement a program for controlling exterior valves based on received sensor data and for communicating with the remote control station to send and receive data and instructions. The re-programmable memory is operable to be re-programmed with new instructions to implement a new program wherein the new instructions are operable to be received wirelessly by the wireless communication device.

. It is appreciated a self-contained controller device can include various interface and communication components. In one embodiment, the wireless communication device comprises an antenna disposed within the interior space. The input/output circuitry can include analog communication circuitry for receiving and sending analog signals, and digital communication circuitry for receiving and sending digital signals.

. It is appreciated a self-contained controller device can include various enclosures. The enclosure can include materials with various characteristics (e.g., shock resistant material, UV resistant material, etc.). The enclosure can be sized sufficiently small and the wireless communication device is configured to operate sufficiently low to the ground that the controller device in the field does not substantially obstruct harvesting equipment. In one embodiment, a port disposed at an opening is sealed with respect to the opening to restrict water entry there through to the interior space.

. Figure 12 is a block diagram of an exemplary programmable microprocessor 3600 in accordance with one embodiment. Programmable microprocessor 3600 includes microprocessor 3621 communicatively coupled to power component 3622, supervisor component 3623, memory 3625, configurable analog components 3627, configurable digital component 3628, and general purpose input/output component 3629. The configurable components of programmable microprocessor 3600 can be reprogrammed/reconfigured in the field.

. Some portions of the detailed descriptions are presented in terms of procedures, logic blocks, processing, and other symbolic representations of operations on data bits within a computer memory. These descriptions and representations are the means generally used by those skilled in data processing arts to effectively convey the substance of their work to others skilled in the art. A procedure, logic block, process, etc., is here, and generally, conceived to be a self-consistent sequence of steps or instructions leading to a desired result. The steps include physical manipulations of physical quantities. Usually, though not necessarily, these quantities take the form of electrical, magnetic, optical, or quantum signals capable of being stored, transferred, combined, compared, and otherwise manipulated in a computer system. It has proven convenient at times, principally for reasons of common usage, to refer to these signals as bits, values, elements, symbols, characters, terms, numbers, or the like.

. It should be borne in mind, however, that all of these and similar terms are associated with the appropriate physical quantities and are merely convenient labels applied to these quantities. Unless specifically stated otherwise as apparent from the following discussions, it is appreciated that throughout the present application, discussions utilizing terms such as "processing", "computing", "calculating", "determining", "displaying" or the like, refer to the action and processes of a computer system, or similar processing device (e.g., an electrical, optical or quantum computing device) that manipulates and transforms data represented as physical (e.g., electronic) quantities. The terms refer to actions and processes of the processing devices that manipulate or transform physical quantities within a computer system's component (e.g., registers, memories, other such information storage, transmission or display devices, etc.) into other data similarly represented as physical quantities within other components.

. The foregoing descriptions of some specific embodiments of the present invention have been presented for purposes of illustration and description. They are not intended to be exhaustive or to limit the invention to the precise forms disclosed, and obviously many modifications and variations are possible in light of the above teaching. The embodiments were chosen and described in order to best explain the principles of the invention and its practical application, to thereby enable others skilled in the art to best utilize the invention and various embodiments with various modifications as suited to the particular use contemplated. It is intended that the scope of the invention be defined by the Claims appended hereto and their equivalents. The listing of steps within method claims do not imply any particular order to performing the steps, unless explicitly stated in the claim.

. It is appreciated the systems and methods can include various concepts and implementations. The following is a description of some of concepts or implementations in accordance with some embodiments.
. Concept 1. A power self harvesting control device comprising:
   a power sub-system configured to self-harvest energy required to power its functionality, wherein the power sub-subsystem comprises a non-removable self contained energy storage component operable to store self-harvested energy;
   a communication sub-system configured to communicate with a remote device;
   an external function interface sub-system configured to receive and generate input/output signals associated with interactions with external components; and
   a management sub-system configured to manage and coordinate activities of the power sub-system, the communication sub-system, and external function interface sub-system, including managing and coordinating supply and consumption of the self-harvested energy.
. Concept 2. The power self harvesting control device of Concept 1 wherein the power sub-system further comprises a self-harvesting energy component.
. Concept 3. The power self harvesting control device of Concept 2 wherein the self-harvesting energy component comprises a solar cell component.
. Concept 4. The power self harvesting control device of Concept 3 wherein the solar cell component comprises a protective cover layer disposed on a surface thereof.
. Concept 5. The power self harvesting control device of Concept 4 wherein the protective cover layer comprises a gorilla glass cover layer.
. Concept 6. The power self harvesting control device of Concept 2 wherein the non-removable self contained energy storage component is re-charged with energy from the self-harvesting energy component.
. Concept 7. The power self harvesting control device of Concept 6 wherein the non-removable self contained energy storage component comprises one or more super capacitors.
. Concept 8. The power self harvesting control device of Concept 7 wherein the one or more super capacitors are charged to a threshold that is no more than 80% to 85% of its maximum rated capacity.
. Concept 9. The power self harvesting control device of Concept 1 wherein the power sub-system supplies power to the communication sub-system, the external function interface sub-system, and the management sub-system.
. Concept 10. The power self harvesting control device of Concept 1 wherein the external function interface supplies power to external components comprising valve control devices and sensors.
. Concept 11. The power self harvesting control device of Concept 1 wherein the power sub-subsystem supplies power at a first voltage level to the external function interface and supplies power at a second voltage level to the communication sub-system and the management sub-system wherein the first voltage level is higher than the second voltage level.
. Concept 12. The power self harvesting control device of Concept 11 wherein the first voltage level is in the range of 5.0 to 7.0 volts plus or minus 10 percent and the second voltage level is 2.0 to 3.0 volts plus or minus 10 percent.
. Concept 13. The power self harvesting control device of Concept 1 further comprising an enclosure structurally configured to secure and seal the power sub-system, the external function interface sub-system, the management sub-system and the communication sub-system wherein the seal is operable to seal against external environmental conditions.
. Concept 14. The power self harvesting control device of Concept 13 further comprising a potting material wherein the potting material is disposed over to cover the power sub-system, the external function interface sub-system, the management sub-system and the communication sub-system wherein the potting material is operable to prevent water infiltration.
. Concept 15. The power self harvesting control device of Concept 13 wherein the energy harvesting sub-system comprises a self-harvesting energy component and wherein further the self-harvesting energy component is coupled to the enclosure with a pressure sensitive adhesive (PSA).
. Concept 16. A method of low power remote control and sensing, the method comprising:
   self-harvesting and storing energy by a device wherein the device is a remote in-field installed device;
   controlling supply and consumption of the energy by the device;
   interacting with other external devices, wherein the interacting comprises: receiving information regarding external environmental conditions from an external sensor; and directing control of an external component based upon the external environmental conditions;
   wirelessly communicating with a remote gateway device on a periodic basis to report information and receive commands and data;
   coordinating activities associated with the self-harvesting, the controlling supply and consumption of the energy, and the interacting with other external devices, wherein the coordinating comprises directing:
      collection and storage of the self harvested energy in a non removable storage component; and
      ensuring sufficient energy is available before performing internal tasks and external activities.
. Concept 17. The method of Concept 16 further comprising protecting components of the device from environmental impacts including impacts associated with physical contact and intrusion by various particles from the environment.
. Concept 18. The method of Concept 17 wherein the impacts are associated with physical contact include shock, vibration, compression, and tension.
. Concept 19. The method of Concept 17 wherein the impacts are associated with moisture.
. Concept 20. The method of Concept 17 wherein the impacts are associated with submersion in liquid.
. Concept 21. The method of Concept 17 wherein the impacts are associated corrosion.
. Concept 22. The method of Concept 17 wherein the interacting with other external devices comprises performing instrumentation and control operations associated with an irrigation feedback and program control loop.
. Concept 23. A self-contained controller device, said device comprising:
   an enclosure defining an interior space and comprising a first opening; a second opening and a third opening, wherein the enclosure is sealed to restrict water entry to the interior space;
   an energy harvesting device sealed with respect to the first opening to restrict water entry to the interior space, the energy harvesting device operable to generate and provide power;
   a plurality of super capacitors disposed within the interior space and operable to receive and store power generated from the energy harvesting device;
   control electronics disposed within the interior space and comprising a processor and re-programmable memory, the control electronics coupled to receive power from the plurality of super capacitors and operable for capturing sensor data, operable for generating valve control information and further operable to communicate with a remote control station;
   a wireless communication device disposed within the interior space and coupled to the control electronics and operable to provide wireless communication for the control electronics; and
   input/output circuitry operable for generating signals responsive to the control electronics to control exterior valves and further operable for receiving sensor data from exterior sensors, wherein the input/output circuitry is disposed within the interior space and coupled to ports disposed at the second and third openings.
. Concept 24. The self-contained controller device of Concept 23 wherein the energy harvesting device is a solar panel disposed to cover the first opening and sealed to the enclosure with a pressure sensitive adhesive (PSA) to restrict water entry to the interior space, and wherein further the solar panel comprises a gorilla glass cover layer.
. Concept 25. The self-contained controller device of Concept 23 wherein the control electronics operate at a low voltage level for power conservation and wherein the input/output circuitry operates at a standard digital voltage compatible with remote electronics.
. Concept 26. The self-contained controller device of Concept 23 wherein the low voltage level is approximately 2.2 volts and wherein the standard digital voltage is approximately 5.0 volts.
. Concept 27. The self-contained controller device of Concept 23 wherein the plurality of super capacitors are operable to provide power to the input/output circuitry and to the wireless communication device.
. Concept 28. The self-contained controller device of Concept 23 further comprising pot material disposed to cover the plurality of super capacitors, the control electronics, the wireless communication device and the input/output circuitry, wherein the pot material is operable to prevent water from the interior space from reaching the plurality of super capacitors, the control electronics, the wireless communication device, and the input/output circuitry.
. Concept 29. The self-contained controller device of Concept 23 wherein the control electronics comprise a programmable system on a chip (PSOC) device comprising:
   the processor; and
   the re-programmable memory, wherein the re-programmable memory comprises instructions that when executed by the processor implement a program for controlling exterior valves based on received sensor data and for communicating with the remote control station to send and receive data and instructions.
. Concept 30. The self-contained controller device of Concept 29 wherein the re-programmable memory is operable to be re-programmed with new instructions to implement a new program wherein the new instructions are operable to be received wirelessly by the wireless communication device.
. Concept 31. The self-contained controller device of Concept 23 wherein the wireless communication device comprises an antenna disposed within the interior space.
. Concept 32. The self-contained controller device of Concept 23 wherein the input/output circuitry comprises:
   analog communication circuitry for receiving and sending analog signals; and
   digital communication circuitry for receiving and sending digital signals.
. Concept 33. The self-contained controller device of Concept 23 wherein the enclosure comprises a shock resistant material.
. Concept 34. The self-contained controller device of Concept 23 wherein the enclosure comprises a ultra violet (UV) resistant material.
. Concept 35. The self-contained controller device of Concept 23 wherein the enclosure comprises a corrosive resistant material.
. Concept 36. The self-contained controller device of Concept 23 wherein the enclosure comprises an environmental condition resistant material.
. Concept 37. The self-contained controller device of Concept 23 wherein the enclosure comprises a temperature resistant material.
. Concept 38. The self-contained controller device of Concept 23 wherein the enclosure comprises a liquid submersion resistant material.
. Concept 39. The self-contained controller device of Concept 23 wherein the solar panel and the plurality of super capacitors are configured to provide all power as required by the control electronics, the wireless communication device and the input/output circuitry during lifetime operations thereof.
. Concept 40. The self-contained controller device of Concept 23 wherein the enclosure is sized sufficiently small and the wireless communication device is configured to operate sufficiently low to the ground that the controller device in the field does not substantially obstruct harvesting equipment.
. Concept 41. The self-contained controller device of Concept 21 wherein the ports disposed at the second and third openings are sealed with respect to the second and third openings to restrict water entry there through to the interior space.

## Claims

1. A power self harvesting control device comprising:
a power sub-system configured to self-harvest energy required to power its functionality, wherein the power sub-subsystem comprises a non-removable self contained energy storage component operable to store self-harvested energy;
a communication sub-system configured to communicate with a remote device;
an external function interface sub-system configured to receive and generate input/output signals associated with interactions with external components; and
a management sub-system configured to manage and coordinate activities of the power sub-system, the communication sub-system, and external function interface sub-system, including managing and coordinating supply and consumption of the self-harvested energy.

2. The power self harvesting control device of Claim 1 wherein the power sub-system further comprises a self-harvesting energy component.

3. The power self harvesting control device of Claim 2 wherein the self-harvesting energy component comprises a solar cell component.

4. The power self harvesting control device of Claim 3 wherein the solar cell component comprises a protective cover layer disposed on a surface thereof.

5. The power self harvesting control device of Claim 4 wherein the protective cover layer comprises a gorilla glass cover layer.

6. The power self harvesting control device of Claim 2 wherein the non-removable self contained energy storage component is re-charged with energy from the self-harvesting energy component.

7. The power self harvesting control device of Claim 6 wherein the non-removable self contained energy storage component comprises one or more super capacitors.

8. The power self harvesting control device of Claim 7 wherein the one or more super capacitors are charged to a threshold that is no more than 80% to 85% of its maximum rated capacity.

9. The power self harvesting control device of Claim 1 wherein the power sub-system supplies power to the communication sub-system, the external function interface sub-system, and the management sub-system.

10. The power self harvesting control device of Claim 1 wherein the external function interface supplies power to external components comprising valve control devices and sensors.

11. The power self harvesting control device of Claim 1 wherein the power sub-subsystem supplies power at a first voltage level to the external function interface and supplies power at a second voltage level to the communication sub-system and the management sub-system wherein the first voltage level is higher than the second voltage level.

12. The power self harvesting control device of Claim 11 wherein the first voltage level is in the range of 5.0 to 7.0 volts plus or minus 10 percent and the second voltage level is 2.0 to 3.0 volts plus or minus 10 percent.

13. The power self harvesting control device of Claim 1 further comprising an enclosure structurally configured to secure and seal the power sub-system, the external function interface sub-system, the management sub-system and the communication sub-system wherein the seal is operable to seal against external environmental conditions.

14. The power self harvesting control device of Claim 13 further comprising a potting material wherein the potting material is disposed over to cover the power sub-system, the external function interface sub-system, the management sub-system and the communication sub-system wherein the potting material is operable to prevent water infiltration.

15. The power self harvesting control device of Claim 13 wherein the energy harvesting sub-system comprises a self-harvesting energy component and wherein further the self-harvesting energy component is coupled to the enclosure with a pressure sensitive adhesive (PSA).
